# EUROPÄISCHE PATENTSCHRIFT

(11) **EP 3 351 826 B1**
(45) Veröffentlichungstag und Bekanntmachung des Hinweises auf die Patenterteilung: **13.03.2019**
(21) Anmeldenummer: 17152884.7
(22) Anmeldetag: 24.01.2017
(51) Int. Cl.: F16H 37/00, F16H 1/46, F16H 49/00, F16H 37/04

(54) **KOMPAKTES MEHRSTUFIGES GETRIEBE MIT EINEM PLANETENGETRIEBE UND EINEM DARAN ANSCHLIESSENDEN WELLGETRIEBE**
COMPACT MULTI-STAGE TRANSMISSION COMPRISING A PLANETARY GEAR AND A SUBSEQUENT SHAFT DRIVE
BOÎTE DE TRANSMISSION MULTI-ÉTAGÉE COMPACTE COMPRENANT UN ENGRENAGE PLANÉTAIRE ET UNE DÉMULTIPLICATION HARMONIQUE S'Y RACCORDANT

(43) Veröffentlichungstag der Anmeldung: 25.07.2018
(73) Patentinhaber: Lakeview Innovation Ltd., 6374 Buochs (CH)
(72) Erfinder: Frey, Dominik, 79211 Denzlingen (DE); Schelb, Marco, 79114 Freiburg (DE); Rissler, Alexander, 79350 Sexau (DE)
(74) Vertreter: Grünecker Patent- und Rechtsanwälte PartG mbB

(56) Entgegenhaltungen:
- WO-A1-2015/139915
- CN-U- 2 043 692
- DE-A1- 10 151 878
- DE-B3- 10 333 951
- US-A- 4 003 272

## Beschreibung

Die vorliegende Erfindung betrifft ein mehrstufiges Getriebe mit einem Planetengetriebe und einem daran anschließenden bzw. nachgeschalteten Wellgetriebe nach dem Oberbegriff des unabhängigen Anspruchs 1.

Bei einem derartigen mehrstufigen Getriebe steht ein Abtrieb des Planetengetriebes mit einem Wellgenerator des Wellgetriebes in Antriebsverbindung. Das Planetengetriebe ist zumindest teilweise radial innerhalb des Wellgetriebes angeordnet.

Mehrstufige Getriebe der gattungsgemäßen Art bieten den Vorteil einer sehr kurzen axialen Baulänge bei gleichzeitiger Spielfreiheit des Getriebes. Reine Planetengetriebe sind hingegen üblicherweise nicht spielfrei. Durch die Kombination eines Planetengetriebes mit einem Wellgetriebe können hohe Untersetzungsverhältnisse erreicht sowie hohe Drehmomente erzeugt werden. Derartige Getriebe sind besonders interessant für Antriebe im Bereich der Radantriebe und der Robotikanwendungen, wo gleichzeitig sowohl Spielfreiheit als auch ein hohes Drehmoment benötigt werden.

Ein mehrstufiges Getriebe nach dem Oberbegriff des unabhängigen Anspruchs 1 ist beispielsweise in DE 10333951 B3 beschrieben. Bei diesem Getriebe kommt ein einstufiges Planetengetriebe zum Einsatz, dessen Planetenräder einerseits mit dem Sonnenrad kämmen und sich andererseits auf einer innenliegenden, außenverzahnten Stützscheibe abstützen. Der Wellgenerator des Wellgetriebes wird ausschließlich an dem einzigen Planetenträger des Planetengetriebes abgestützt.

Ein weiteres mehrstufiges Getriebe nach dem Oberbegriff des unabhängigen Anspruchs 1 ist aus DE 10151878 A1 bekannt. Auch bei diesem Getriebe wird der Wellgenerator des Wellgetriebes ausschließlich an dem einzigen Planetenträger des Planetengetriebes abgestützt. Die Planetenräder des Planetengetriebes kämmen mit dem Sonnenrad und einem innenverzahnten Hohlrad, das in axialer Richtung betrachtet neben dem Wellgetriebe angeordnet ist, wodurch der Aufbau bei diesem Getriebe insgesamt nicht ganz so kompakt ist wie bei dem Getriebe aus DE 10333951 B3.

Aufgabe der vorliegenden Erfindung ist es, ein mehrstufiges Getriebe mit Planetengetriebe und daran anschließendem Wellgetriebe anzugeben, das insbesondere in axialer Richtung besonders kompakt, verschleißarm, in sich stabil und dabei gleichzeitig geeignet ist, hohe Kippmomente um eine Achse aufzunehmen, die senkrecht auf die Längsachse des Getriebes steht.

Die Aufgabe wird gelöst durch die Merkmale des unabhängigen Anspruchs 1. Demnach liegt bei einem mehrstufigen Getriebe gemäß dem Oberbegriff des unabhängigen Anspruchs 1 dann eine erfindungsgemäße Lösung der Aufgabe vor, wenn der Wellgenerator radial auf einem Hohlrad des Planetengetriebes gelagert ist. Das Hohlrad weist vorzugsweise eine Innenverzahnung auf. Weiter vorzugsweise kämmen Planetenräder des Planetengetriebes mit der Innenverzahnung des Hohlrads. Das Hohlrad bildet weiter vorzugsweise ein Gehäuse des Planetengetriebes, wie es bei handelsüblichen Planetengetrieben der Fall ist. Beim Aufbau des erfindungsgemäßen mehrstufigen Getriebes kann daher auf Standard-Planetengetriebe zurückgegriffen werden, die gegebenenfalls nur geringfügig modifiziert werden müssen. Das Planetengetriebe und das Wellgetriebe haben bei dem erfindungsgemäßen Getriebe dieselbe Längsachse.

Vorteilhafte Ausführungsformen der vorliegenden Erfindung sind Gegenstand der Unteransprüche.

Gemäß einer besonders bevorzugten Ausführungsform der vorliegenden Erfindung ist der Abtrieb des Planetengetriebes ein Planetenträger des Planetengetriebes, wobei dieser Planetenträger einteilig mit dem Wellgenerator ausgeführt ist. Dadurch wird eine besonders kompakte Integration des Planetengetriebes in dem Wellgetriebe möglich. Ferner wird dadurch die Anzahl der erforderlichen Bauteile reduziert, was wiederum den Herstellungsaufwand und die damit verbundenen Kosten senkt.

Gemäß einer weiteren besonders bevorzugten Ausführungsform der vorliegenden Erfindung ist der Wellgenerator mit zumindest einem Wälzlager auf dem Hohlrad des Planetengetriebes gelagert. Dadurch wird das erfindungsgemäße mehrstufige Getriebe besonders stabil und verschleißarm. Besonders vorteilhaft ist es dabei, wenn der Wellgenerator mit zwei axial voneinander beabstandeten Wälzlagern auf dem Hohlrad des Planetengetriebes gelagert ist. Weiter vorzugsweise handelt es sich bei dem Wälzlager oder den Wälzlagern um Kugellager. Weiter vorzugsweise sind die Wälzlager an den axialen Enden des Wellgenerators angeordnet, wodurch sich eine besonders stabile und verschleißarme Lagerung ergibt. In diesem Zusammenhang ist es von besonderem Vorteil, wenn der wirksame axiale Abstand zwischen den beiden Wälzlagern zumindest die Hälfte der axialen Überlappung von Wellgenerator und Hohlrad beträgt. Weiter vorzugsweise beträgt der wirksame axiale Abstand zwischen den beiden Wälzlagern zumindest 70 % der axialen Überlappung von Wellgenerator und Hohlrad.

Gemäß einer weiteren Ausführungsform der vorliegenden Erfindung ist das Planetengetriebe mehrstufig ausgeführt, wobei der Wellgenerator das Hohlrad des Planetengetriebes maximal über die Hälfte der axialen Länge des Hohlrads umschließt. Dabei ergibt sich ein guter Kompromiss zwischen stabiler Lagerung und leichter Bauweise.

Gemäß einer alternativen Ausführungsform der vorliegenden Erfindung ist das Planetengetriebe einstufig ausgeführt, wobei der Wellgenerator das Hohlrad über die gesamte axiale Länge des Hohlrads umschließt.

Gemäß einer weiteren bevorzugten Ausführungsform der vorliegenden Erfindung beträgt die axiale Überlappung von Planetengetriebe und Wellgetriebe zumindest 80 % der axialen Länge des Planetengetriebes. Dadurch ergibt sich eine kompakte Bauweise. Besonders bevorzugt ist das Planetengetriebe über seine vollständige axiale Länge von dem Wellgetriebe eingeschlossen.

Weiter vorzugsweise bildet ein äußeres Hohlrad des Wellgetriebes, welches mit Innenverzahnung versehen ist, den Abtrieb des mehrstufigen Getriebes. Dadurch können besonders hohe Drehmomente übertragen werden. Dabei ist das zwischen Wellgenerator und äußerem Hohlrad des Wellgetriebes angeordnete flexible Stirnrad des Wellgetriebes feststehend. Es kann beispielsweise fest mit dem Hohlrad des Planetengetriebes verbunden sein. Alternativ kann auch das flexible Stirnrad des Wellgetriebes den Abtrieb bilden. Hierbei ist das äußere Hohlrad des Wellgetriebes feststehend ausgeführt. Besonders bevorzugt handelt es sich bei dem Wellgetriebe um ein Harmonic Drive Getriebe.

Die vorliegende Erfindung stellt auch eine Antriebseinheit mit einem erfindungsgemäßen mehrstufigen Getriebe und einem Elektromotor bereit. Dabei ist das Planetengetriebe durch den Elektromotor angetrieben, wobei der Elektromotor vorzugsweise als Innenläufermotor ausgeführt ist.

Ein Ausführungsbeispiel der vorliegenden Erfindung wird im folgenden anhand einer Zeichnung näher erläutert.

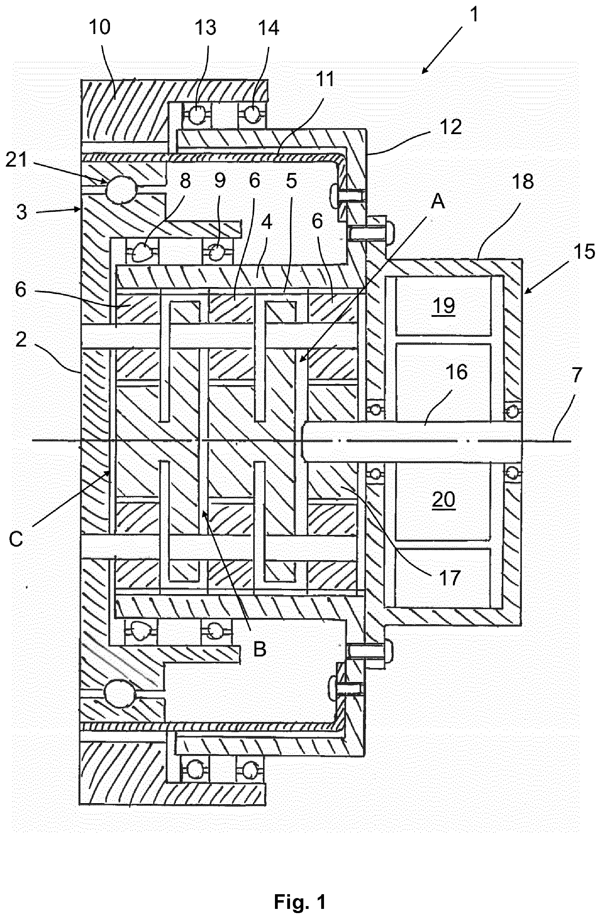

Figur 1 zeigt einen Längsschnitt durch ein Ausführungsbeispiel einer erfindungsgemäßen Antriebseinheit 1 mit einem Elektromotor 15 und einem erfindungsgemäßen mehrstufigen Getriebe. Das mehrstufige Getriebe besteht aus einem dreistufigen Planetengetriebe und einem nachgeschalteten Wellgetriebe. Das Planetengetriebe ist radial innerhalb des Wellgetriebes angeordnet. Planetengetriebe und Wellgetriebe teilen sich eine gemeinsame Längsachse 7. Das Planetengetriebe wird durch den Elektromotor 15 angetrieben. Bei dem Elektromotor 15 handelt es sich um einen Innenläufermotor. Er weist daher einen außenliegenden Stator 19, welcher fest mit dem Gehäuse 18 des Elektromotors verbunden ist, und einen innenliegenden Rotor 20 auf. Der Rotor 20 umfasst die Motorwelle 16, die in der Darstellung auf der linken Seite aus dem Gehäuse 18 des Elektromotors hervorsteht und deren Ende das Eingangssonnenrad 17 der ersten Stufe A des dreistufigen Planetengetriebes trägt. Jede der drei Planetenstufen A, B und C besteht aus einem entsprechenden Sonnenrad, einem Planetenträger, sowie daran drehbar gelagerten Planetenrädern 6, die einerseits mit dem entsprechenden Sonnenrad der jeweiligen Planetenstufe und andererseits mit der Innenverzahnung 5 eines außenliegenden Hohlrads 4 des Planetengetriebes kämmen.

Der Planetenträger 2 der letzten Planetenstufe C bildet den Abtrieb des dreistufigen Planetengetriebes. Er ist einteilig mit dem Wellgenerator 3 des nachgeschalteten Wellgetriebes ausgeführt. Dieser ist wiederum mit zwei axial voneinander beabstandeten Kugellagern 8 und 9 radial auf dem Hohlrad 4 des Planetengetriebes gelagert. Wie aus der Zeichnung deutlich wird, umschließt der Wellgenerator 3 das Hohlrad 4 etwa über die Hälfte der axialen Länge des Hohlrads 4. Die beiden Kugellager 8 und 9 sind derart positioniert, dass sie im wesentlichen an den gegenüberliegenden Enden des Wellgenerators 3 angeordnet sind.

Der Wellgenerator 3 hat eine bekanntermaßen elliptische Form und verursacht bei einer Drehung eine umlaufende Verformung des außen liegenden flexiblen Stirnrads 11 des Wellgetriebes. Zwischen dem Wellgenerator 3 und dem flexiblen Stirnrad 11 ist in bekannter Weise ein entsprechendes Wälzlager 21 angeordnet. Das flexible Stirnrad 11 ist bei dem gezeigten Ausführungsbeispiel drehfest mit dem Hohlrad 4 des Planetengetriebes verbunden. Es kann hierzu beispielsweise mit einem Fortsatz 12 des Hohlrads 4 verschraubt sein, der allerdings bereits nicht mehr zum Planetengetriebe gezählt werden kann sondern Teil des außen liegenden Wellgetriebes ist. Anstatt eines Fortsatzes des Hohlrads 4 kann hier auch ein separates Bauteil zum Einsatz kommen.

Das flexible Stirnrad 11 weist eine Außenverzahnung auf, die bei einer Drehung des Wellgenerators abschnittsweise umlaufend mit einer Innenverzahnung des außenliegenden Hohlrads 10 des Wellgetriebes in Eingriff gebracht wird. Das Hohlrad 10 bildet den Abtrieb des erfindungsgemäßen mehrstufigen Getriebes. Es ist auf dem Fortsatz 12 des Hohlrads 4 des Planetengetriebes mittels zweier Kugellager 13 und 14 drehbar gelagert. Die beiden Kugellager 13 und 14 sind in ähnlicher Weise wie die beiden Kugellager 8 und 9 beabstandet voneinander angeordnet, um eine besonders stabile Lagerung des Hohlrads 10 zu gewährleisten.

## Patentansprüche

1. Mehrstufiges Getriebe mit einem Planetengetriebe und einem daran anschließenden Wellgetriebe, wobei ein Abtrieb (2) des Planetengetriebes mit einem Wellgenerator (3) des Wellgetriebes in Antriebsverbindung steht, und wobei das Planetengetriebe zumindest teilweise radial innerhalb des Wellgetriebes angeordnet ist, **dadurch gekennzeichnet, dass** der Wellgenerator (3) radial auf einem Hohlrad (4) des Planetengetriebes gelagert ist.

2. Mehrstufiges Getriebe nach Anspruch 1, **dadurch gekennzeichnet, dass** der Abtrieb (2) des Planetengetriebes ein Planetenträger des Planetengetriebes ist, wobei dieser Planetenträger einteilig mit dem Wellgenerator (3) ausgeführt ist.

3. Mehrstufiges Getriebe nach Anspruch 1 oder 2, **dadurch gekennzeichnet, dass** der Wellgenerator (3) mit zumindest einem Wälzlager (8, 9) auf dem Hohlrad (4) des Planetengetriebes gelagert ist.

4. Mehrstufiges Getriebe nach Anspruch 3, **dadurch gekennzeichnet, dass** der Wellgenerator (3) mit zwei axial voneinander beabstandeten Wälzlagern (8, 9) auf dem Hohlrad (4) des Planetengetriebes gelagert ist

5. Mehrstufiges Getriebe nach Anspruch 4, **dadurch gekennzeichnet, dass** der wirksame axiale Abstand zwischen den beiden Wälzlagern (8, 9) zumindest die Hälfte der axialen Überlappung von Wellgenerator (3) und Hohlrad (4) beträgt.

6. Mehrstufiges Getriebe nach einem der Ansprüche 1 bis 5, **dadurch gekennzeichnet, dass** das Planetengetriebe mehrstufig ausgeführt ist, wobei der Wellgenerator (3) das Hohlrad (4) maximal über die Hälfte der axialen Länge des Hohlrads (4) umschließt.

7. Mehrstufiges Getriebe nach einem der Ansprüche 1 bis 5, **dadurch gekennzeichnet, dass** das Planetengetriebe einstufig ausgeführt ist, wobei der Wellgenerator (3) das Hohlrad (4) über die gesamte axiale Länge des Hohlrads (4) umschließt.

8. Mehrstufiges Getriebe nach einem der Ansprüche 1 bis 7, **dadurch gekennzeichnet, dass** die axiale Überlappung von Planetengetriebe und Wellgetriebe zumindest 80% der axialen Länge des Planetengetriebes beträgt.

9. Mehrstufiges Wellgetriebe nach Anspruch 8, **dadurch gekennzeichnet, dass** das Planetengetriebe über seine vollständige axiale Länge von dem Wellgetriebe eingeschlossen ist.

10. Antriebseinheit (1) mit einem mehrstufigen Getriebe nach einem der Ansprüche 1 bis 9, **dadurch gekennzeichnet, dass** die Antriebseinheit einen Elektromotor (15) aufweist, wobei das Planetengetriebe durch den Elektromotor (15) angetrieben ist, und wobei der Elektromotor (15) ein Innenläufermotor ist.

## Claims

1. Multi-stage gear with a planetary gear and a strain wave gear adjacent to said planetary gear, wherein a drive (2) of the planetary gear maintains a drive connection with a wave generator (3) of the strain wave gear, and wherein the planetary gear is arranged at least partially radially within the strain wave gear, **characterized in that** the wave generator (3) is mounted radially on a ring gear (4) of the planetary gear.

2. Multi-stage gear according to Claim 1, **characterized in that** the output (2) of the planetary gear is a planetary carrier of the planetary gear, wherein this planetary carrier is formed as one part with the wave generator (3).

3. Multi-stage gear according to Claim 1 or 2, **characterized in that** the wave generator (3) is mounted with at least one roller bearing (8, 9) on the ring gear (4) of the planetary gear.

4. Multi-stage gear according to Claim 3, **characterized in that** the wave generator (3) is mounted on the ring gear (4) of the planetary gear with two roller bearings (8, 9) that are axially spaced from one another.

5. Multi-stage gear according to Claim 4, **characterized in that** the effective axial distance between the two roller bearings (8, 9) amounts to at least half of the axial overlap of the wave generator (3) and the ring gear (4).

6. Multi-stage gear according to one of the Claims 1 to 5, **characterized in that** the planetary gear is formed in a multi-stage way, wherein the wave generator (3) encloses the ring gear (4) over a maximum of half of the axial length of the ring gear (4).

7. Multi-stage gear according to one of the Claims 1 to 5, **characterized in that** the planetary gear is formed in a single-stage way, wherein the wave generator (3) encloses the ring gear (4) over the entire axial length of the ring gear (4).

8. Multi-stage gear according to one of the Claims 1 to 7, **characterized in that** the axial overlap of the planetary gear and the strain wave gear amounts to at least 80% of the axial length of the planetary gear.

9. Multi-stage strain wave gear according to Claim 8, **characterized in that** the planetary gear is enclosed over its entire axial length by the strain wave gear.

10. Drive unit (1) with a multi-stage gear according to one of the Claims 1 to 9, **characterized in that** the gear unit has an electric motor (15), wherein the planetary gear is driven by the electric motor (15), and wherein the electric motor (15) is an internal rotor motor.

## Revendications

1. Boite de transmission à étages multiples comprenant une transmission à train épicycloïdal à laquelle se raccorde une transmission à engrenages à onde de déformation également dite transmission harmonique, une sortie (2) de la transmission à train épicycloïdal étant en liaison de transmission d'entrainement avec un générateur d'onde de déformation (3) de la transmission harmonique, et la transmission à train épicycloïdal étant agencée au moins en partie radialement à l'intérieur de la transmission harmonique, **caractérisée en ce que** le générateur d'onde de déformation (3) est monté radialement sur une couronne (4) de la transmission à train épicycloïdal.

2. Boite de transmission à étages multiples selon la revendication 1, **caractérisée en ce que** la sortie (2) de la transmission à train épicycloïdal est un porte-satellites de la transmission à train épicycloïdal, ce porte-satellites étant réalisé d'un seul tenant avec le générateur d'onde de déformation (3).

3. Boite de transmission à étages multiples selon la revendication 1 ou la revendication 2, **caractérisée en ce que** le générateur d'onde de déformation (3) est monté à l'aide d'au moins un palier à roulement (8, 9), sur la couronne (4) de la transmission à train épicycloïdal.

4. Boite de transmission à étages multiples selon la revendication 3, **caractérisée en ce que** le générateur d'onde de déformation (3) est monté à l'aide de deux paliers à roulement (8, 9) espacés axialement l'un de l'autre, sur la couronne (4) de la transmission à train épicycloïdal.

5. Boite de transmission à étages multiples selon la revendication 4, **caractérisée en ce que** la distance axiale effective entre les deux paliers à roulement (8, 9) est au moins égale à la moitié du chevauchement axial du générateur d'onde de déformation (3) et de la couronne (4).

6. Boite de transmission à étages multiples selon l'une des revendications 1 à 5, **caractérisée en ce que** la transmission à train épicycloïdal est d'une configuration à étages multiples, le générateur d'onde de déformation (3) entourant la couronne (4) au maximum sur la moitié de la longueur axiale de la couronne (4).

7. Boite de transmission à étages multiples selon l'une des revendications 1 à 5, **caractérisée en ce que** la transmission à train épicycloïdal est d'une configuration à un seul étage, le générateur d'onde de déformation (3) entourant la couronne (4) sur la totalité de la longueur axiale de la couronne (4).

8. Boite de transmission à étages multiples selon l'une des revendications 1 à 7, **caractérisée en ce que** le chevauchement axial de la transmission à train épicycloïdal et de la transmission à engrenages à onde de déformation est égal à au moins 80% de la longueur axiale de la transmission à train épicycloïdal.

9. Boite de transmission à étages multiples selon la revendication 8, **caractérisée en ce que** la transmission à train épicycloïdal est entourée sur la totalité de son étendue axiale, par la transmission à engrenages à onde de déformation.

10. Unité d'entrainement (1) comprenant une boite de transmission à étages multiples selon l'une des revendications 1 à 9, **caractérisée en ce que** l'unité d'entrainement comprend un moteur électrique (15), la transmission à train épicycloïdal étant entrainée par le moteur électrique (15), et le moteur électrique (15) étant un moteur à rotor intérieur.
